# EUROPEAN PATENT SPECIFICATION

(11) **EP 4 387 851 B1**
(45) Date of publication and mention of the grant of the patent: **23.04.2025**
(21) Application number: 22758281.4
(22) Date of filing: 12.08.2022
(51) Int. Cl.: B44D 2/00, B44F 11/02

(54) **SYSTEM FOR DISPLAYING LIGHT PROJECTION IMAGES, METHOD FOR PRODUCING A LIGHT IMAGE AND PROJECTING THE LIGHT IMAGE ONTO AN OBJECT, METHOD OF PROCESSING A DIGITAL IMAGE**
SYSTEM ZUR ANZEIGE VON LICHTPROJEKTIONSBILDERN, VERFAHREN ZUR ERZEUGUNG EINES LICHTBILDES UND PROJEKTION DES LICHTBILDES AUF EIN OBJEKT, VERFAHREN ZUR VERARBEITUNG EINES DIGITALEN BILDES
SYSTÈME D'AFFICHAGE D'IMAGES DE PROJECTION DE LUMIÈRE, PROCÉDÉ DE PRODUCTION D'UNE IMAGE DE LUMIÈRE ET PROJECTION DE L'IMAGE DE LUMIÈRE SUR UN OBJET, PROCÉDÉ DE TRAITEMENT D'UNE IMAGE NUMÉRIQUE

(30) Priority: 18.08.2021 NL 2028985; 18.08.2021 NL 2028986
(43) Date of publication of application: 26.06.2024
(73) Proprietor: Imagan B.V., 5271 TE Sint Michielsgestel (NL)
(72) Inventor: NINABER, Johannes Hendrikus, 5271 TE Sint Michielsgestel (NL)
(74) Representative: van Straaten, Joop
(86) International application number: PCT/NL2022/050467
(87) International publication number: WO 2023/022590

(56) References cited:
- FR-A1- 2 683 769
- GB-A- 1 366 724

## Description

The invention concerns a system for displaying light projection images, with the system comprising a means to input a picture and a means to provide image information to a light projection set-up for displaying a light image on an object for applying a picture to the object using different colour means.

The invention also concerns a method for producing a light image and projecting the light image onto an object.

French patent FR 2683769 shows a method in which an image is projected onto a carpet. Fine details are applied with an airbrush, the rest is colored.

GB 1366724 shows a method and a system to turn a colour image into a line drawing with colour areas in the line drawing being designated by numbers. The line drawing can be transferred to transparent material and projected onto a wall or another surface.

GB2127753 shows the use of a slide in order to project such a line drawing onto a background. The line drawing comprises large and small areas enclosed and separated by lines. Each of the large and small areas has been provided with a visible number. A set of different colours as paints is proposed with the picture with the paints having been provided with corresponding numbers. The actual picture is created by painting all the large and small areas provided with numbers with the paint options matching the corresponding numbers indicated.

Commercial services now offer programs to convert photographs into line drawings where the colours are indicated by numbers.

There are some shortcomings to the known systems and methods. The drawings are often complicated and have many details and the often black lines needed to separate the areas disturb the picture especially in the case of lighter colours and are hard to paint over using paint to make sure that they will no longer be visible in the final result. The disadvantage of a projection of a paint-by-number set of lines is that the lines in the projection are thin and are hard to see without sharply focussing the light projection set-up and in addition the dimensions of the areas which can be enclosed by the lines are limited since excessively small areas close to each other and in complex shapes are difficult to tell apart when filling in the paints.

A direct projection of a colour image in colour does not have the disadvantages posed by the lines, but has other disadvantages: it is often difficult to properly tell different colours apart and it is usually hard to discern whether or not something has already been painted if the colour of the light looks like the colour to be painted and they cancel each other out of if the painted area comprises empty spots or stripes, red paint on a red projected colour area is substantially impossible to distinguish from non-painted parts of the red colour area compared to the painted part. The eye perceives a troubled environment and is optically continually confused, trying to distinguish whether it is observing the colour of the light or the colour of the applied paint.

A general disadvantage of existing systems and methods is also that the creative colour freedom of choice for the painter doing the painting is restricted to a strict indication of the colour necessary to make sure that the picture will have the exact same colours or if the number of colours to be used cannot be chosen by the person doing the painting but have been determined in advance.

Therefore, there is a need for a new system and method which can prevent or at least reduce the disadvantages identified.

To this end, a system according to the invention is defined in claim 1 and methods are defined in claims 19 and 20.

For the purpose of the invention the light projection set-up can, for example, both be a projector which when in use projects a light image onto the object from some distance and, for example, a digitally controlled VDU or light box onto which the user can lay an at least partially transparent object.

For the purpose of the invention an object, in a preferred embodiment, can be a painting canvas and, as a further example, a sheet of paper and in the embodiment where a projector is used at some distance from the object to be painted according to a projection a wall, door, fence or other object, such as a roof of a car, an advertising sign or a side of a lorry.

Contrary to the existing systems and methods where the system provides all information in a single image, the image information in the system and the method according to the invention are split into a series of projection images and the system according to the invention establishes 3 or more sub-areas within the input picture, or within a cut-out of the input picture, with pixels in a pixel properties range specific to each sub-area, preferably a specific greyscale range. The image information provided to the projector comprises information to display a set of 3 or more projection images. Each projection image of the set displays one of the 3 or more sub-areas with substantially uncoloured light of a first light intensity.

In each of the projection images of the set of projection images, the rest of the picture, or the rest of the cut-out of the picture, is indicated by light of a second light intensity differing from the first light intensity. The projection images collectively at least substantially cover the picture or the cut-out of the picture. The use of light parts which are to be painted and dark parts which are not to be painted can also be reversed for the implementation so that the painting instructions actually serve to fill in the unilluminated area in each projection step.

Before implementing the division into the three or more areas an input picture can first be edited, e.g. by applying autocontrast, by changing brightness, changing contrast, changing the shape of the cut-out, photoshopping the photograph or the cut-out, inserting parts of another photograph, etc.

Preferably, the light for the rest of the picture or cut-out is substantially uncoloured.

In embodiments the rest of the picture or the cut-out of the picture can be represented using coloured light.

In embodiments the information for a sub-area can comprise the technical steps to be carried out for a colour means to be used and/or for the sub-area in question and this can be given per colour in each individual step to be painted. The sub-areas to be painted are projected step by step by uncoloured light, white light and the parts which are not to be painted using the colour means in question or which are not be technically adapted are also presented by uncoloured white light. The difference in light intensity shows what should be painted or drawn.

Contrary to known prior art in which a single image is projected with all information, the 3 or more projection images are projected separately in successive fashion in the system and the method according to the invention. The relevant part of the drawings and in embodiments the information needed for the projection image and step in question in order to paint true to the shape is presented to the user for each step.

No dividing lines are displayed in the projection images, thus avoiding that the search for colour projection areas in the light image is disturbed by the presence of several different dividing lines. Where there are dividing lines it is not clear which of the colours for the adjacent two or three areas between the dividing lines should be used for painting when looking for the further course of the area to be painted. This problem is avoided by the present invention. For each projection image where uncoloured light indicates a colour area or colour areas to be painted, the rest of the picture is shown by means of a differing light intensity, for example leaving it at least substantially unilluminated, preferably completely unilluminated. The user is not given any confusing information for the part of the picture or cut-out which does not require any action during the application step in question, thus greatly reducing any probability of confusion.

Preferably the part of the picture which is to be painted is presented by white light and the rest, which is not to be painted, is left unilluminated. In embodiments it is possible, relative to the amount of light projected onto parts to be painted, to project a small amount of light onto the parts not to be painted. In embodiments, if the part to be painted or drawn is projected by means of white light of a certain light intensity, it is possible to project the rest of the picture or the cut-out with a lower light intensity, e.g. with a ten or fifty times lower light intensity. There is often sufficient ambient light to keep the parts not to be painted visible, but if there is very little ambient light, e.g. in a darkened room it may be useful to project some light onto the parts not to be painted.

In the method and when using the system according to the invention the user is not overburdened by excessive colour information about all other colours still to be painted. Each projection image of the set of projection images only provides the information for the colour to be implemented in each step in an area demarcated with or by light and for each step the user can concentrate on a colour which is specifically to be applied for a specific part of the picture or the cut-out to be applied to the object.

Contrary to existing methods and systems no material to be used needs to be provided with painting instructions as according to preferred embodiments of the system of the present invention they have substantially all been incorporated into information which is expressed by light and therefore no preparations are needed and it is still easy to change the choice for a picture to be painted. The use of materials according to the invention and in particular the object to be painted, preferably a painting canvas, can be standard material which is also used for conventionally painted pictures. When using a single projection image with all information in a known projection system some parts which have to be painted a certain colour are sometimes forgotten or people mistake the colour number.

When using such systems for projection it has also been determined in advance that the entire picture should be visible on the object to be painted to ensure that the indication of numbers for the colour areas is always visibly displayed and is not omitted from the display.

This prevents the painter's free choice to for example present a larger or smaller version or only part of the picture on the object or greatly reduces this possibility. The present invention prevents this because each colour to be applied is visible as a bright area of light and there are no colour indications in the area. This prevents users from having to look for what they should do and gives them freedom to decide the size in which and which part of the picture is applied to the object.

In order for the process to be successful with known systems the choice of paint is established in advance and is fixed. The present invention gives the person carrying out the application a certain degree of free choice in determining the colours and as long as the contrast value of the colours chosen increases or decreases per projection step to be painted there will be a realistically recognisable representation of the subject to be painted.

A further advantage is that a colour can be finished in its entirety and it is immediately visible whether the colour has been finished in its entirety, whereas in known systems and methods the colour number is also painted over while painting the colour as a result of which the instruction will no longer be visible.

People who perform the method according to the invention can easily see which part of the highlighted area already has colour and which part still needs to be coloured. Bright and substantially uncoloured light makes it easy to see whether a colour projection area of an area which is demarcated with or by light has already been painted or drawn and how well it has been painted or drawn, streaks, stripes or sections which have been missed are immediately visible in the colour of the background or the unpainted object. It can also be seen quickly and easily whether the painting or drawing has properly filled the area to be painted or drawn.

When painting according to the invention the person doing the painting enjoys a certain degree of creative freedom as to the colours to be used, partly because the system provides for a system where depth and shape are the most decisive factors and it is not necessarily assumed that the colours of the picture to be painted will be true to the colours of the original picture.

Another advantage of the invention is that the system and the method for painting according to the invention can be used by people who are colour blind just as well as by people who are not colour blind and particularly so if the system proposes the colours. All the colours are applied consecutively and even a person who is colour blind can see whether or not this is going right. Someone who is colour blind can read little or no information from a colour projection and also little from a paint-by-number image; they paint over the numbers and usually there are too many numbers, and often the colours of the numbers are also indicated by means of a picture. One in 12 men has some form of colour blindness.

In preferred embodiments the number of projection images in a set is less than or equal to 12, preferably less than or equal to 8. In preferred embodiments the number of projection images is 4, 5, 6 or 7. An insufficient number of projection images can lead to relatively little depth in the painting or drawing, too many projection images can lead to too many actions.

The system is preferably set up such that the projection images are shown in ascending or descending order of greyscale values. The artist can work from light to dark, i.e. first paint or draw the parts of the image with the lowest greyscale values and then the parts with the second lowest greyscale values etc., or they can work from dark to light.

The system preferably comprises a means enabling the user to make a cut-out from an input image, with the cut-out being analysed next and being projected by meanss of projection images. This makes it possible, for example, to use part of a larger photograph such as a face to make a painting.

The means to make the cut-out has preferably been designed to enable the user to choose the position, size and/or shape of the cut-out. The user can then choose which part of, for example, the face will be used. The system can comprise a means to analyse an input picture and propose a cut-out. The system can find the outline of a face in a picture, e.g. by means of face recognition and find a potentially interesting cut-out based on that and show this in a presentation of the picture. Users can then adjust the shape or the size according to their wishes.

In embodiments the means comprises an output feature for displaying, along with the projection image, characteristics of one or more colour means to be used when applying colour areas for the projection image onto or next to the object. This enables several things including using projection light to highlight the colour to be used on the colour palette or otherwise indicating it by means of light for each process step. Characteristics can be displayed below, above or next to the object. In addition or as an alternative, while projecting a projection image information can be sent to the user through other channels such as via an app or an internet site which the user can open, receive and display on a portable image display device, such as a tablet computer, a smartphone, on the other hand the light projection set-up can also consist of a tablet computer on which the projection image can be shown and placed under a partially translucent object in order to paint the light images to be projected.

Displaying characteristics of one or more colour means for applying colour areas together with the projection image facilitates the use of the system. Characteristics of a colour means can be one or more of the following characteristics: the colour, the name, the number, the manufacturer or the mixing ratio of one or more colours. The desired colour mixing information is displayed by specifying which colours are desired together and which mixing ratio is desired for a mixed colour, particularly if the subject is repainted to be true to the original colours.

Preferably as a minimum requirement the colour is displayed together with such designations as the name, or number and/or manufacturer. Displaying the colour, preferably next to an edge of the picture, enables the user to quickly check whether the correct colour means is being used. In embodiments the means comprises a shifting means to enable the user to shift the display of the colour over the projection image. This enables the user to place the colour indication where it is most convenient for the user such as for example an paint palette located in front of the object where it highlights the paint to be used on the palette. The instructions provided by the system of the present invention can also include mixing instructions for combining and or mixing two or more colours to be used and dosing the colours to be used on the palette.

For the purpose of the invention the term colour means is taken to refer to, without being exhaustive, acrylic paint, oil paint, water paint, inks, felt tip pens, colouring pencils, wax crayons, colouring crayons and/or spray paint. Paints can be oil-based, synthetic or water-based. In embodiments a colour means can also be a transparent varnish layer or a colour means with limited colour density.

In preferred embodiments the means also comprises an input feature for inputting projection images from an existing portfolio.

Users can use photos that are dear to them for making a painting, e.g. of the face of a relative. In embodiments the user can also opt to copy a picture from a portfolio.

In a preferred embodiment there can be two or more sets of sub-areas to be painted for one picture to be painted, with the system being configured such that after a first set of projection images has been displayed in order for a first layer to be applied one or more further sets of projection images are displayed in order to apply one or more further layers of paint over the first layer, which should preferably be less opaque or only partially cover the earlier layers. This allows the picture to be applied in multiple glazing layers. This embodiment does not require a second or successive partially transparent layer to be applied for the entire picture and it can be restricted to one or more parts of the picture.

The number of projection images per layer can vary. In embodiments the number of projection images for a first layer, the lower layer, is less than for a second layer, an upper layer, e.g. 3 or 4 for the first layer and 5, 6, or 7 for the second layer.

For the present invention the application of colour means in the present invention need not be limited to brushes or pens but application using a palette knife, hands or fingers, stamps, air brushing or sponges is also possible.

In preferred embodiments the image information comprises information for a further number of projection images for the picture chosen, with each projection image indicating parts to be applied specifically for the projection image in question within the picture to be applied by indicating the parts to be applied for the projection image in question by means of at least substantially uncoloured light and by leaving the rest of the picture to be applied which does not comprise any information for the specific projection image to be applied for each projection image unilluminated, with the joint projection images at least substantially covering the picture and with each projection image comprising information of a specific greyscale range, with the greyscale ranges not or at least substantially not overlapping and the number of projection images equalling or being greater than 3.

A further number of projection images is displayed in this preferred embodiment.

The system according to one of these preferred embodiments allows users to build up the picture to be applied in layers, greatly increasing the possibility of recreating a picture which is true to the original or, at the user's discretion, of artistic expression. None of the existing systems or methods enables this.

Also for second and further layers the number of projection images can preferably be between 4 and 12, and most preferably 4, 5, 6 or 7.

For second and further layers a transparent layer or a partially transparent varnish layer can be linked to one or more of the projection images.

In a preferred embodiment the means comprises an output to display characteristics for following instructions according to a projection image which characteristics serve to mix two or more colour means on the object and mixing instructions to have the colours merge over the projection image. In this embodiment according to the invention it is possible to use light projection images to indicate to the user which colours, for instance of adjacent colours which are still wet and can still be worked, may or must be partly or partially mixed together. This must be done in areas and then specifically in those projection areas marked by uncoloured light and this must not be done in unilluminated sub-areas. This method according to the invention can also be used, for example, to add additional elements to the subject to be painted, such as texts or decorative elements or other elements which are not in the original picture.

A transition from one colour to the other adjacent colour is hard to determine for laymen and even trained artists and is even harder to apply. This is because in that case there is no hard separation of one colour from another colour but rather an instruction which indicates the area in which a certain colour mix of the two colours is necessary or useful for a better result in matching colours already applied. In the preferred embodiment the system uses projection images to indicate where a transition to an adjacent colour can be merged by using a mix of colour means or by mixing editable colours within these projection image areas together. This enables a more realistic likeness and a more professional look to be achieved. None of the existing systems or methods enable such detailed painting instructions.

In embodiments the means analyses the subject to be painted from an input picture. It is difficult for users to determine a transition from one colour area to another adjacent colour area, particularly if the subject from the picture is painted in other colours than colours that are true to the original picture. The system calculates and determines contrast in greyscale values and determines the areas where they are best balanced with the light intensity value to be used of the colours to be applied and where the transition to a next colour area is located and within which light area the contrast values come together. In embodiments the system analyses the greyscale values to be used for the contrast sub-areas and it leaves a certain tolerance for the user to choose the set of colours to be used provided that the colours in this set of colours chosen have sufficient contrast in greyscale distance from each other according to the system. This enables the user to not be stuck with a predetermined combination of colours but to be given room by the system to make their own creative choices. The present invention is characterised in that it allows a certain freedom to choose colours contrary to many examples of prior art including paint-by-number applications where the colour is predetermined and adjusting a colour within a certain range is not an option.

Changing colours in a paint-by-number embodiment **can lead** to the true-to-the-original reproduction being disrupted and negatively affects the final result when assessing whether the subject painted is true to the original. Prior art, such as paint by number, does not provide for a background or other area in the picture being left out either.

In an embodiment according to the present invention the means comprises a supply feature to supply an image in colour values to a converter to convert the colour image into greyscale values and into the number of projection images where a greyscale range is assigned to each projection image and the greyscale ranges together comprise a substantially uninterrupted greyscale range from light to dark.

Projection images can be supplied directly to the system, e.g. a set of projection images for a painting from a database portfolio of standard subjects, e.g. for painting the Night Watch or the Sunflowers. In that case, the input into the system can be used directly without any further conversion being required as this has been prepared before and stored in the system's database.

The preferred embodiment enables an image to be supplied in greyscale values. This enables, for example, old black-and-white photos to be turned into projection images and to use these to produce a colour painting or drawing.

There are several ways to convert greyscale images into projection images where the collections of pixels with greyscale values are converted into certain greyscale ranges in sub-areas.

Greyscale values can be represented digitally and the most commonly used scale values are from 0 to 256. A first possible division of pixels is to divide this scale into equal parts. A second possible distribution is one where, towards the middle of the scale, the greyscale ranges are incrementally smaller than for the lowest and highest greyscale values.

A third possible division can be made as follows:
A greyscale histogram is made of the greyscale values for the pixels of the image, where the image can be either an entire picture or a cut-out of a picture or an edited version thereof. Next, when using n greyscale ranges for a total of M pixels, the M/n pixels with the lowest greyscale values are displayed in the first projection image, the M/n pixels with the highest greyscale values in the last projection image, with every other projection image comprising groups of M/n pixels.

In this latter division the division depends on the content of the input picture in greyscale values and an analysis of the greyscale image must therefore be carried out prior to the division. A part of the invention provides for a system in which this grey value division is carried out in a part of the subject in the picture outlined by the user with the grey values outside this outline not being converted into higher or lower values than those in the areas inside the outline. This step according to the invention can prevent that one or more projection images show light projection areas which are exclusively outside the subject which would therefore reduce the number of colours needed for the subject itself.

In embodiments where the user had specified a set of colours or a set of colour means this enables the subject to thus be divided into greyscale ranges each of which cover an area around the greyscale values of the colours specified.

In the embodiment where a black-and-white photograph is used to create a colour painting or colour drawing the system preferably is provided with an input feature to enable a user, after having been shown one or more of the projection images, to input a desired colour for one or more of the projection images and to have the means select and display characteristics of a colour means of colour means matching the input colour or colours.

In an embodiment where a black-and-white photograph is used to create a colour painting or colour drawing the system is preferably provided with a shape analyser to analyse shapes in the black-and-white photograph and to use the means to display characteristics of colour means matching the analysed shapes.

Many shapes are known and recognisable such as trees, shrubs, skies, clouds, faces, hands, clothes, hats, earth. Based on the shapes and an average grey value for the shapes an estimate can be made for the colour which will be the best match. In a preferred embodiment the system is provided both with an input feature to enable the user to input colours and a shape analyser. The colours entered by the users for certain parts of a black-and-white photograph provide the system with information which in turn can be used by the shape analyser as part of the present invention.

In an embodiment the means comprises a further supply feature to supply a colour image to a further converter which converts the colour image into the greyscale image.

A colour image can be converted into a greyscale image.

There are several ways to do that, summaries of several ways to convert a colour image into a greyscale image (colour-to-grayscale conversion) can be found in "Perceptual Evaluation of Color-to-Grayscale Image Conversions" by M. Cadík, in Pacific Graphics 2008, Volume 27 (2008), Number 7 and in other publications. Another example is given in "Apparent Greyscale: A Simple and Fast Conversion to Perceptually Accurate Images and Vide" by Kaleigh Smith, Pierre-Edouard Landes, Joëlle Thollot and Karol Myszkowski in EUROGRAPHICS 2008, Volume 27 (2008), Number 2.

Converting a colour image into a greyscale image and then into an image in hues of grey and then converting this into projection images and displaying the projection images together with colour characteristics makes it possible for laymen or novice artists to realistically and true to the original paint a colour image on an object such as, for example, a canvas or to draw or paint it on paper. This is also the consequence of the fact that a picture often consists of different colours which blend into each other and which are not recognisable or separated by lines which delimit a specific colour area. A recognisable reproduction which is true to the original is not necessarily the result of reproducing an original picture with identical colours but it is specifically the consequence of the use of colours whose colour contrasts or contrast value yield a substantially identical contrast as that known from the original picture for each respective colour area to be reproduced.

In embodiments the colours which are to be used for painting or drawing the sub-areas for each of the projection images are determined by the system according to the present invention or presented to the user as a possible combination of colours or are entered into the system by the user.

In preferred embodiments the system comprises a measurement set-up to measure properties of a paint, where the measurement set-up comprises a camera.

The properties of the paint to be measured can be the colour value and/or the greyscale value.

The measurement set-up can be used for multiple purposes.

A. The system may have proposed one or several paints or a mixture of paints. When choosing paints the user may be mistaken, for example by selecting the wrong paint for painting or by selecting the right paints but planning to apply them in the wrong order. Measuring the properties of a paint which is to be used in the measurement set-up prior to painting makes it possible to check that the paint that will be used is the intended paint. Particularly if users are colour blind, or if the ambient light is dim or coloured, it is difficult or impossible for the user to only use colours as a reference to check that the correct colour will be applied. Measuring the properties, colour and/or greyscale value can prevent mistakes. If the system has indicated a mix of colours, the measurement can give a definitive answer as to whether the mixture that has been made has the envisaged colour and/or grey value. If the colour is not the right one the system can instruct the user to mix in more of one or more of the components. If the colour is the right one, but the paint is too light or too dark, the system can advise the user to mix in white or black to make the paint lighter or darker. After correcting the mixture new measurements can be carried out to determine whether the colour and/or greyscale value of a paint to be used are acceptable.

B. If the user has selected one or more specific paints for use, the measurement system can measure the greyscale values and possibly also the colour values of the paints to be used. Depending on the greyscale values measured for the paints selected by the user, the system can establish one or more sub-areas. The sub-areas are then also determined by the greyscale values of one or more of the paints selected. If the distances in greyscale values of the selected paints are unfavourable, the system can also suggest to the user that the colour or greyscale value of one or more of the selected paints should be adjusted, for example by mixing in white or black paint. An example is a series of five selected paints where the first greyscale value of two of the paints is substantially identical and the other paints have distinctly different greyscale values. It may then be beneficial to adjust the greyscale value of at least one of the selected paints by making the paint lighter or darker.

In preferred embodiments the measurement set-up is provided with a lamp which emits substantially white light. This illuminates all the paints to be measured in the same and known way while measuring.

In preferred embodiments the system leaves the user a certain degree of freedom to make a creative choice as regards the colours to be used together provided that the colour combination chosen goes through comparable ascending steps as the original. Highly practised painters are able to choose the right colours for a true-to-the-original comparison with the original in a realistic colour reproduction, but mixing paints to create the right colour is difficult. Embodiments of the invention provide for digital analysis of the colour areas considering possibly available colours. Colours and paints are made and determined by the pigment available. Other than in print technology where (CMYK and RGB) colour systems are used and colour authenticity is high , many paints for painters, even those for primary colours, have many differences regarding how the wet paint looks compared to the colour after the paint has dried. Practised artists can often be recognised by the colours they choose to faithfully reproduce a subject which these specific artists repeatedly use as a signature of their work and in this sense the system according to the invention offers room for recognisable creative choices and these signature choices can be adopted as a personally recognisable style.

Embodiments according to the invention comprise an input system for the number of projection images to be input by a user. In such an embodiment users can enter projection images themselves.

In embodiments the system comprises an analyser to analyse the input colour image and/or the greyscale image and a comparator for comparing the results of the analysis to a database which comprises data of paints and for preparing and showing the user one or more sample sets of the paints to be used together and previews of the results which can be reached. In such embodiments the system carries out an assessment for projection images to determine which colour best matches the contrast of the average colour, for example by calculating the average colour values for a projection image and searching a database of paints or colour means to select the colour means whose greyscale contrasts and colour point most closely match the average greyscale value and the average colour point of the projection image. The outcome of such comparisons determines a sample colour set. The system can generate several different sample sets. For example, the user can indicate a preference for certain colours or combinations of colours. The system can then generate several colour sample sets and compare them to the preferences specified and present them to the user in ascending order of their matching the preferences specified for use of this colour combination set as the paint palette for painting or colouring.

The projection images of the picture comprise those parts of the original picture with a greyscale value between a lower and upper greyscale value specific for the projection image.

In embodiments according to the invention the system comprises the light projection set-up.

In embodiments according to the invention the means comprises an internet site or app enabling the use of a digital service to provide sets of projection images for a subject from specified and/or input pictures.

The internet site or app preferably comprises an input feature to enable the user to send a picture to enable projection images to be presented to be made of the picture sent and comprises an output feature to send the projection images made to the user's light projection set-up, preferably together with designations of characteristics of usable colour means and for linked use of the site or app to control the light projection set-up in order to display the projection images on or below the canvas or paper on which to paint.

Preferably the canvas or paper to be painted is slightly translucent if the light projection set-up is under the canvas or paper enabling the projection images to be followed visually.

Preferably the means comprises an input feature to enable the user to indicate a desired technique or style and the means comprises an output feature for indicating instructions or suggestions, depending on the desired technique specified, when displaying the projection images. This enables users to practice a certain application style or technique. Indications of a desired technique or style can, for example, be indications of the material to be used, such as a brush, the size of brush, the type of brush, knife, airbrush, hands, or indications such as impressionism, expressionism, realism, hyperrealism.

The invention also embodies a method for applying a selected picture to an object as a colour picture with a set of projection images which correspond with certain greyscale ranges of the picture chosen being projected in descending or ascending order of the greyscale values and with colours being applied to each of the projection images in the illuminated parts using a colour means selected or displayed for the projection image.

In a preferred embodiment the object is a painting canvas and prior to displaying the projection images the painting canvas is provided with a background texture layer and/or background colour and where the painting canvas is left unpainted for the lightest or darkest projection image. The pre-processed background can be necessary to achieve a certain effect or a certain technique in combination with the colour application technique or materials to be used.

In embodiments where a background of a picture to be painted is not included as a surface to be painted in a projection image and has thus been left open so that the colour of the background will be preserved in these areas or it is left to the discretion of the person who is doing the painting or drawing to decide whether or not to apply a background with colour or a certain texture.

In the method according to the invention the order in which the projection images are displayed can be from light to dark, which is usually preferred, or from dark to light, which can yield a better effect for certain depictions.

The invention also relates to a method for processing a digital picture where the digital picture is converted into a digital greyscale picture, the digital greyscale picture is divided into three or more sub-areas based on pixel greyscale values with a specific greyscale range for each sub-area and a set of 3 or more digital images is generated from the digital greyscale picture with each digital image of the set comprising one of the 3 or more sub-areas with the pixels of the sub-area in question being assigned pixel values which correspond with a display with substantially uncoloured light of a first light intensity and the rest of the digital picture is assigned pixel values which correspond with light of a second light intensity which differs from the first light intensity with the joint sub-areas at least substantially covering the digital picture.

In brief, it can be stated that the invention makes a painting technique available by which a picture can be painted on a canvas which is realistically true to the original by using a light projection system in which colour areas which have been compared by a computer are converted into greyscale ranges which are projected onto an object by illuminating the object with substantially white light using light projection after which the user applies a colour chosen by the user or indicated by the system for each illuminated projection image. The invention also provides a method for editing a digital picture and generating a set of digital images which can be used for projection in a painting mode according to the invention.

Disclosed is a computer program comprising instructions for implementing the method according to the invention. The computer program according to the invention can comprise instructions for implementing one or more of the different embodiments of the method according to the invention.

Disclosed is computer code comprising instructions for carrying out the method according to the invention. The computer code according to the invention can comprise instructions for performing one or more of the various embodiments of the method according to the invention.

Disclosed is a set of projection images produced according to the method according to the invention.

These and further aspects of the invention are described below and illustrated by means of the drawing:
The figures contained in the drawing show the following:
Figure 1 shows a picture known from digital publication on working with the online colour separation system called PBNify
Figure 2 shows a representation of a colour separation according to the PBNify system where the original picture from figure 1 has been divided into a limited number of colours.
Figure 3 shows a representation of the colour division of figure 2 where each colour is outlined by a line and a number can be placed within each line outline.
Figures 4 and 5A, 5B and 5C show schematic examples of systems according to the invention
Figures 6 and 7 provide flowcharts for embodiments of the invention.
Figures 8 to 16 show illustrations of an embodiment of the invention.
Figure 17 to 25 show illustrations of a further embodiment of the invention.
Figures 26 to 58 show further aspects of embodiments of the invention.

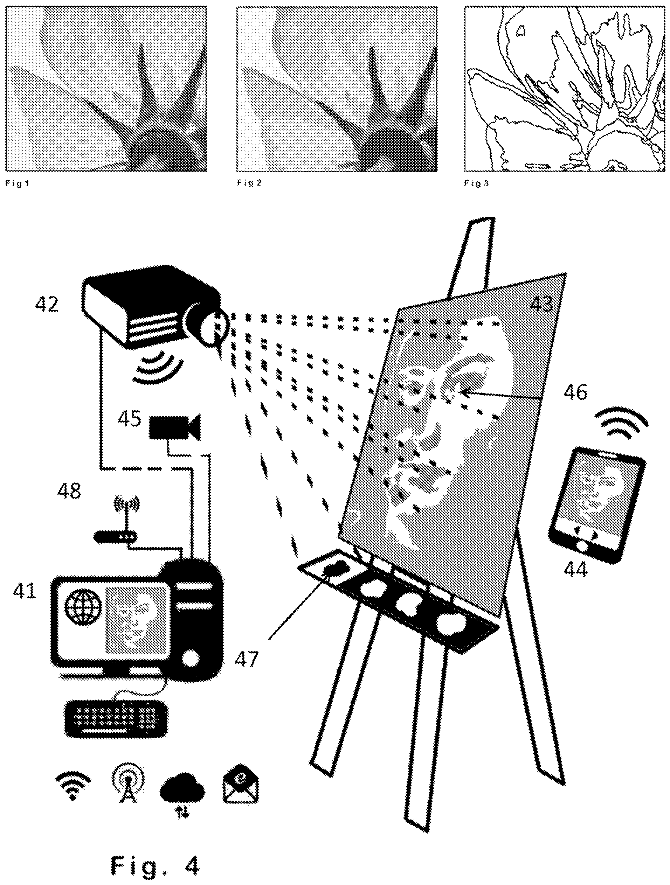

Figure 1 to 3 present prior art.

Figure 1 shows a picture known from digital publication on working with the online colour separation system called PBNify in which this method is described.

Figure 2 shows a representation of a colour separation according to the PBNify system where the picture has been digitally divided into colour areas of equal colour values if the original picture from figure 1 has been divided into a limited number of colours.

Figure 3 shows a representation of the colour division of figure 2 with each colour being outlined by a line and with the possibility to place a number within each outlined area showing whether the limited number of colour values chosen is applicable to the area within the lines.

Thus areas of equal colour are marked with the same numbers.

If a picture is projected onto a canvas according to figure 3 all colour areas are displayed simultaneously as a result of which it is still difficult to find whether the application of a colour while painting is correct. Painting a colour in a light projection of the same colour when simply projecting the picture in colour is quite tricky because colours of a similar kind cancel each other out then as a result of which it is hard to see whether any painting has already been done in a certain area or whether it is only the colour of the light that one is seeing. This means that it may be difficult to find the result in such systems and that this search is frustrated by this lack of visible observation of work which has already been done.

Figure 4 shows a light projection set-up according to the invention showing a light projection using a projector. Figure 4 shows a computer 41, the computer receives a digital picture. There are many ways to input the digital picture, via email, from a mobile phone, from social media, from a cloud service, etc. The input digital picture is then, optionally after having been edited, converted into a set of three or more light projection images. The projection images are projected by projector 42. Figure 4 shows one of the projection images 46 on a canvas 43. A mobile device can also be used instead of a computer. Further information can be projected along with the projection images. The system can be provided with a camera 45. This enables the system to monitor what is being done and project any instructions if necessary. The system can also comprise a website which is accessed for example by means of a smartphone or another portable device, shown in the upper right corner of the figure by device 44, where a photograph is sent to the website, where the editing is done on the website and device 44 can also be used when controlling projector 42 for example for switching over to a next projection image. The set of projection images is sent from the website to the projector 42 possibly via the portable device 44. The website itself can also comprise a portfolio of sets of projection images with the website being able to send the user information about sets of projection images in de database portfolio to enable the user to select a set of projection images from the portfolio.

The website can also comprise a portfolio of sets of projection images which have been previously used or selected by the user which can be added to a database portfolio and shared with other users. This enables users to make a painting, for instance based on a photograph of a loved one who has died, which painting will be an ever better likeness where, for example, in a second version a colour choice which is not considered to be satisfactory after all, or the choice of the number of projection images in a first version can be corrected or improved in the further versions and where several different sets of the same image can be applied over one another in multiple glazing layers of partly transparent paint.

'Practice makes perfect' also applies to using the system and the method for painting according to the invention and therefore a used projection set is preferably saved for possible further refinement or improvement in preferred embodiments of the system. Information 47 can be projected together with the picture below or next to the projected picture. The computer is provided with an input feature for inputting a digital image, e.g. wireless using an antenna 58, but this can also be done via a landline or a direct connection via a USB port with a camera.

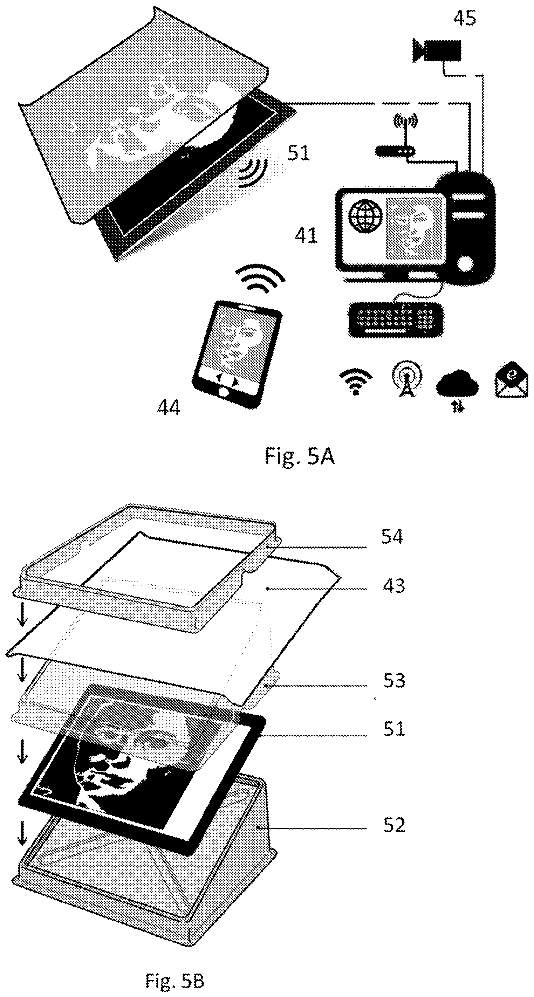

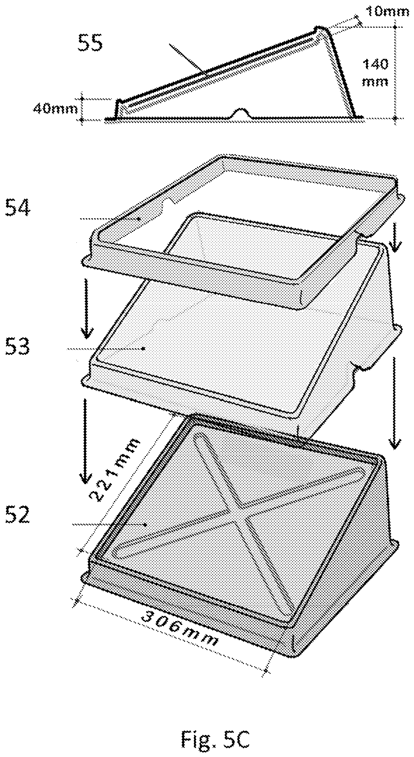

Figures 5A, 5B and 5C show an embodiment of a light projection set-up according to the invention showing a light projection by means of a digitally controlled visual display unit 51 over which a partly translucent object 43, such as a canvas or transparent paper, can be placed. Further functions of the relevant parts of figure 5 here match the description in figure 4. Figure 5B shows a tool for a system according to the invention. The tool comprises a support 52 for a portable visual display unit containing device 51, a cover 53 with a transparent part, where the cover 53 is placed over the support 52 during operation. A cavity 55 has been left open between the cover 53 and the support 52. A device 51 can be placed in this cavity 55. During operation an at least partially transparent object 43 is placed over the cover 53 and a clamp part 54 is placed over object 43. The dimensions indicated in figure 5C serve as examples. They are not to be considered to be limiting dimensions.

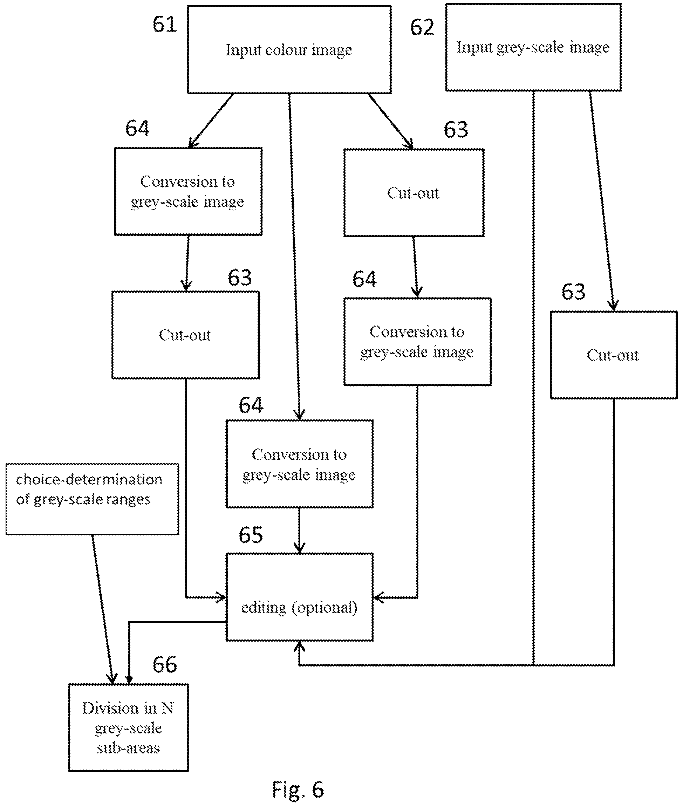

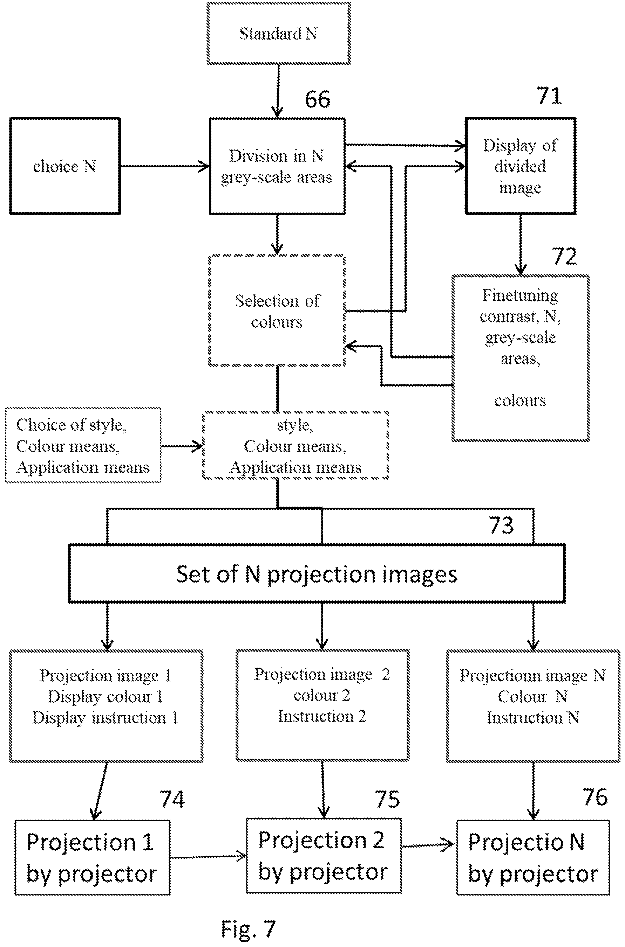

Figures 6 and 7 show schematic flowcharts of an embodiment of the invention. The flowcharts illustrate both steps of the method, such as converting a colour image into a pixel property or greyscale image, and parts of the system, such as a converter for converting a colour image into a greyscale image. In step 61, a digital full-colour image, for example a full-colour photograph, is introduced into an input feature 61 of the system. Alternatively, a pixel property or greyscale image can be introduced into an input feature of the system in step 62. A cut-out can be made from the photograph or picture in step 63 by means of a cut-out device 63 in the system.

If a colour picture is input, a converter 64 in the system can make a conversion to a greyscale photograph in step 64 prior to or after making the cut-out. Optionally the greyscale photograph can be edited in step 75. An editing step can also be performed for making a cut-out and/or converting into a greyscale picture. Depending on a choice as to whether establishment of greyscale ranges is used in order to divide the greyscale picture, the greyscale picture is divided into N sub-areas.

The divided image can be displayed in step 71 on an image display device 71 of the system. The user can influence various characteristics such as contrast, the number of sub-areas, the colours they wish to use, etc. The user can also optionally enter the desired style, colour means and application means.

Depending on any parameters which may or may not have been entered or changed a set of N projection images is made in step 93. The projection images are projected sequentially, starting from the first projection image, under the control of the user.

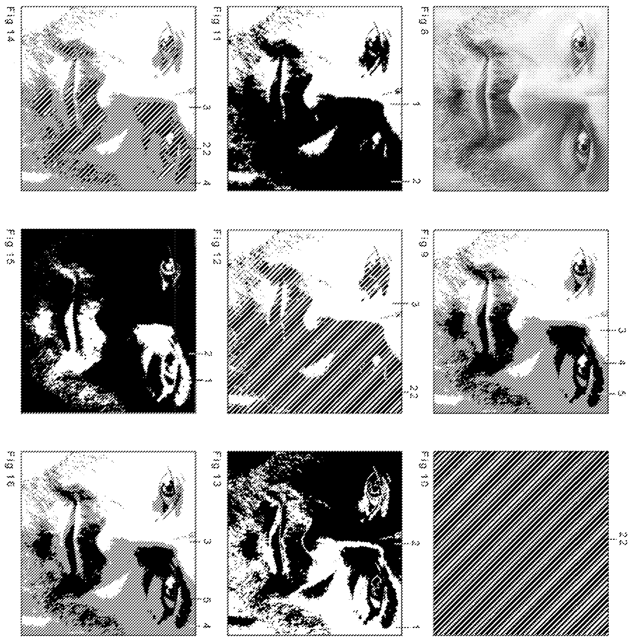

Figure 8 shows a photograph of a person. The figures 9 to 16 show how this photograph goes through the system according to the present invention step by step.

Figure 9 shows a digitally edited version of the photograph from figure 8 with the photograph having been broken up into three colour areas each of which represents a part of the greyscale spectrum in the same greyscale value leading to three areas to be coloured in being visible in ascending order. These colours include white for the lightest colour group, i.e. the colours with a greyscale value between the brightest and a first threshold value and grey for the colours in the middle of the grey greyscale spectrum, i.e. colours with a greyscale value between the first threshold value and a second threshold value and then also black for all dark colour areas, i.e. colours with a grey scale value lower than the second threshold value. This makes these three values a collection of all colours belonging to the same range of values within certain limits. The photograph in this example is subdivided into greyscale ranges. This is a preferred embodiment. The photograph can also be subdivided into pixel value areas. Pixel values normally have four coordinates: e.g. RGB (or CMY) and luminance or greyscale values. Those four pixel values cover a four-dimensional space. The subdivision can be based on pixel value areas within this four-dimensional space. A further possible division into pixel value groups and corresponding pixel value areas is as follows: An average change in the greyscale value and/or colour value of the pixels in the area in question is measured for all pixels of the photograph for a surrounding area of the pixels, e.g. a 3*3 or 5*5 pixel area of which the pixel in question is the centre. Pixels whose change is relatively large are located in sharp edges of elements of the photograph or transitions from one colour to a colour which distinctly differs from this colour. Pixels whose change is relatively small are located in solid-coloured areas. Based on the average change the pixels can be classified into pixel value groups; sharp edges then form one pixel value group, soft edges a further pixel value group, areas where brightness or colour relatively gradually changes into another brightness or colour are yet another group, and solid-coloured areas are a further group.

It is also possible to use a combination for the classification into pixel value groups. A specific pixel value group is then, for example, reserved for the pixels which indicate the hardest edges, i.e. the highest change in pixel values around the pixel. The rest of the pixels can then have been subdivided into the greyscale values. This will result in a painting based on greyscale areas, but with the possibility to accentuate hard edges.

In the preferred embodiment shown the division is based only on the greyscale values of the pixels. This has shown to yield good results.

Figure 10 shows an object to be painted the surface (22) of which is shaded by means of diagonal lines.

Figure 11 shows projection according to the present invention with only the lightest one of the three areas to be coloured being visible as the white area (1) and both colour areas of both the middle colour spectrum and the darkest colour spectrum being black, i.e. they are unilluminated and will not let any light pass nor show any light on the canvas when such an image is projected onto the surface to be painted with the black areas (2). In this case, only the white part (1) will be visible as light on the canvas if a projection lamp displays this picture.

Figure 12 shows which area remains visible in the lightest colour of paint on the surface to be painted and which part still shows the original surface (22) of the surface to be painted shown in figure 7 as a shaded area.

Figure 13 shows a projection according to the present invention with only the middle one of the three areas to be coloured being visible as the white area (1) and both colour areas of both the lightest greyscale range and the darkest greyscale range being black and will not let any light pass nor show any light on the canvas when such an image is projected onto the surface to be painted with the black shaded areas (2). In this case only the white part (1) will be visible as light on the canvas.

Figure 14 shows which area remains visible in the lightest colour of paint on the surface to be painted as well as the result of the paint or other medium applied according to the projection of the middle colour spectrum as described in figure 13 and which part still shows the original surface (22) of the surface to be painted shown in figure 7 as a shaded area.

Figure 15 shows a projection according to the present invention with only the darkest one of the three areas to be coloured being visible as the white area (1) and both colour areas of both the lightest greyscale range and the middle greyscale range being black and will not let any light pass nor show any light on the canvas when such an image is projected onto the surface to be painted with the black shaded areas (2). In this case, only the white part (1) will be visible as light on the canvas if a projection lamp displays this picture and this is intended for applying the darkest of the three colours to be used.

Figure 16 shows the surface to be painted with all three projections of the colour images depicted in white for the lightest greyscale value group colours, grey for the middle greyscale value group colours and black for the darkest greyscale value group colours according to an embodiment of the invention and as a consequence of following the colouring steps this leads to a result which is largely comparable to the result intended according to the system of the present invention as shown in figure 6.

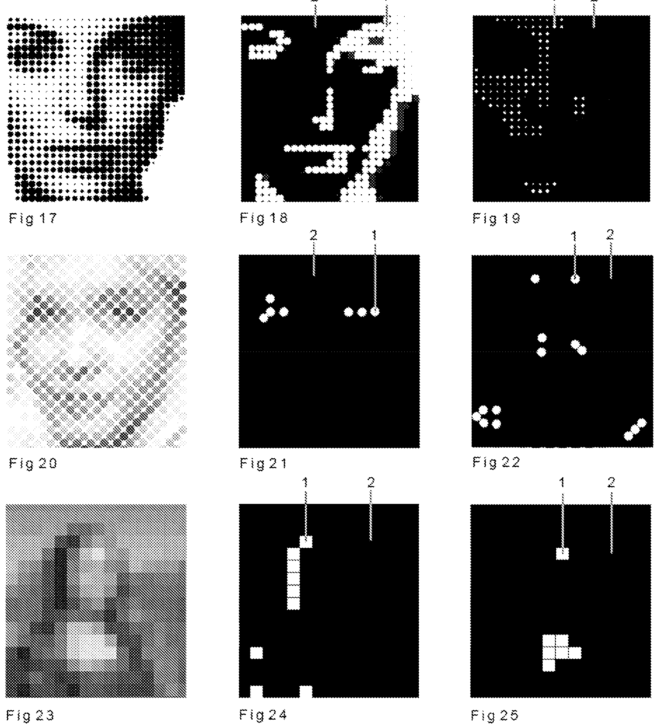

Figure 17 shows an embodiment of the present invention where the system does not indicate any contiguous areas to be coloured in but a collection of schematically positioned round shapes which depending on the colour value they represent have certain dimensions and thus contrast with the background they are in and jointly convert the desired picture into circles of a certain size and if so desired a certain colour.

Figure 18 shows a projection image according to the present invention where only the largest circles are shown by means of light so that it can be recognised where they should be placed and provided with a colour means.

Figure 19 shows a projection image according to the present invention where only the smaller circles are displayed by means of light so that it can be recognised where they should be placed and provided with a colour means.

Figure 20 shows a similar set-up of circle positions according to the present invention with the size of the circles being equal in all projections but where the greyscale value determines which ones belong to the same colour.

Figure 21 shows a projection image according to the present invention where only the darkest circles are shown by means of light so that it can be recognised where they should be placed and provided with a colour means.

Figure 22 shows a projection image according to the present invention where only the lightest colour circles or group of colour circles are shown by means of light so that it can be recognised where they should be placed and provided with a colour means.

Figure 23 shows an embodiment of the present invention where the system does not indicate any collection of contiguous areas to be coloured in but a collection of schematically positioned square shapes in a diamond pattern which depending on the colour value represented by them represent a particular colour in the image and thus contrast with the adjacent square shapes in which they are located and jointly convert the desired picture into square contiguous areas of a certain size and if so desired a certain colour.\

Figure 24 shows a projection image according to the present invention in the technique intended as in figure 23 where only the darkest square areas in the diamond pattern are shown by means of light so that it can be recognised where they should be placed and provided with a colour means.

Figure 25 shows a projection image according to the present invention in the technique intended as in figure 23 where only the lightest square areas of the diamond pattern are shown by means of light so that it can be recognised where they should be placed and provided with a colour means.

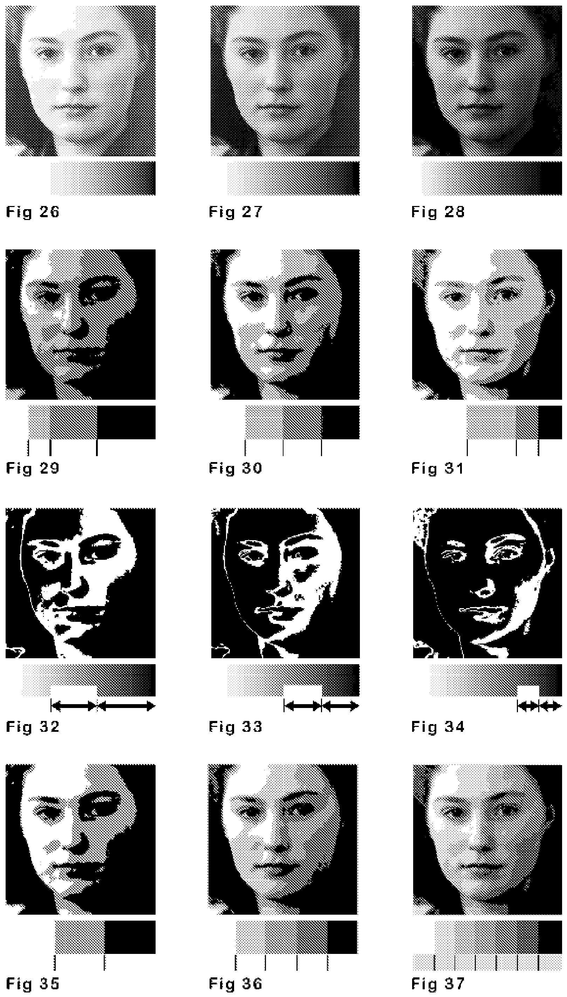

Figure 26 shows an overexposed photograph with a bar under it showing the colour spectrum gradient in balance with the photograph and ascending from light to dark with a larger part of the colour balance in the lighter colour spectrum.

Figure 27 shows the photograph from figure 26 in a well-illuminated configuration with a bar under it showing the colour spectrum gradient in balance with the photograph and ascending from light to dark in an even distribution. The greyscale bar under the photograph shows a particularly even gradient from light to dark.

Figure 28 shows the photograph from figure 26 in an underexposed photograph with a bar under it showing the colour spectrum gradient in balance with the photograph and ascending from light to dark with a larger part of the colour balance in the dark colour spectrum.

Figure 29 shows the underexposed photograph from figure 28 with light areas taking up more space. By painting the four areas using a set of four colours in which the middle colours are darker than the middle colours of the evenly distributed colour configuration from figure 30 the underexposed effect of the photograph is corrected by the use of the relatively darker colours when painting.

Figure 30 shows the well-exposed photograph from figure 27 with the image having been broken up into four colour tone areas which are proportionally ascendingly darker, thus giving the face the right shape. If these areas were to be painted with relatively lighter middle colour paint the end result would give the impression of the image having been overexposed. If these areas were to be painted with relatively darker middle colour paint, the end result would give the impression of the image having been underexposed.

Figure 31 shows the overexposed photograph from figure 26 with dark areas taking up more space. By painting the four areas using a set of four colours in which the middle colours are lighter than the middle colours of the evenly distributed colour configuration from figure 30, the overexposed effect of the photograph is corrected by the use of the relatively lighter colours when painting.

Figure 32 shows the light projection of the third darkest colour from light to dark as derived from figure 29 showing an underexposed photograph, i.e. defining an area to be painted with the third darker colour in ascending order if the middle colours of a four-colour configuration from light to dark relatively light colour had been compared to the colour used in the third darker area in ascending order of the colour configuration of figure 30.

Figure 33 shows the light projection of the third darkest colour from light to dark as derived from figure 30 showing a well-exposed photograph, i.e. defining an area to be painted with the third darker colour in ascending order if the middle colours of a four-colour configuration from light to dark match well with evenly ascending ever darker steps from light to dark.

Figure 34 shows the light projection of the third darkest colour from light to light as derived from figure 31 showing an overexposed photograph, i.e. defining an area to be painted with the third darker colour in ascending order if the middle colours of a four-colour configuration from light to dark relatively dark colour had been compared to the colour used in the third darker area in ascending order of the colour configuration of figure 30.

Figure 35 shows the well-exposed photograph from figure 27 with the image being broken up into three colour tone areas which are proportionally ascendingly darker and thus give the face its correct shape. If these areas were to be painted with colour means which become proportionally ascendingly darker the end result would give the impression of a naturally shaped face as if the image were a well-exposed photograph.

Figure 36 shows the well-exposed photograph from figure 27 with the image being broken up into five colour tone areas which are proportionally ascendingly darker and thus give the face its correct shape. If these areas were to be painted with colours of paint which become proportionally ascendingly darker the end result would give the impression of a naturally shaped face as if the image were a well-exposed photograph.

Figure 37 shows the well-exposed photograph from figure 27 with the image being broken up into seven colour tone areas which are proportionally ascendingly darker and thus give the face its correct shape. If these areas were to be painted with colours of paint which become proportionally ascendingly darker the end result would give the impression of a naturally shaped face as if the image were a well-exposed photograph.

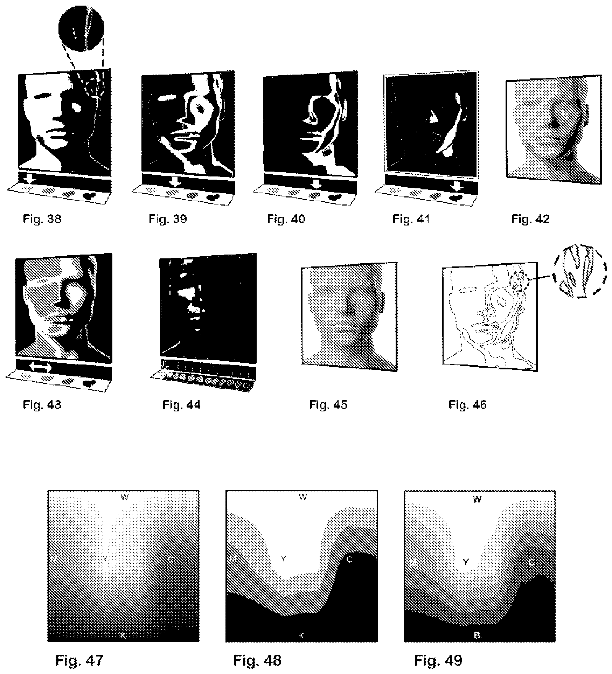

Figure 38 shows the light projection according to the present invention of the lightest colour means to be painted from the picture shown in figure 42 in a light projection set-up with the colour means applied to a colour palette in the light projection indicating which colour on the palette of colours to be used belongs to the colour projection area shown as an easy way to make it clear to the person doing the painting which colour means is to be used. An enlargement above the picture clearly shows that even the smallest lines and areas to be coloured can easily be distinguished from the parts which should not be painted in that colour.

Figure 39 shows the light projection according to the present invention of the second lightest colour means to be painted from the picture shown in figure 42 in a light projection set-up with the colour means applied to a colour palette in the light projection indicating which colour belongs to the colour projection area shown as an easy way to make it clear to the person doing the painting which colour means is to be used and has been highlighted on the palette as the second lightest colour.

Figure 40 shows the light projection according to the present invention of the second darkest colour means to be painted from the picture shown in figure 42 in a light projection set-up with the colour means applied to a colour palette in the light projection indicating which colour belongs to the colour projection area shown as an easy way to make it clear to the person doing the painting which colour means is to be used and has been highlighted on the palette as the second darkest colour.

Figure 41 shows the light projection according to the present invention of the darkest colour means to be painted from the picture shown in figure 42 in a light projection set-up with the colour means applied to a colour palette in the light projection indicating which colour belongs to the colour projection area shown as an easy way to make it clear to the person doing the painting which colour means is to be used and has been highlighted on the palette as the darkest colour.

Figure 42 shows the picture from figure 45 according to the present invention which has been divided into colour areas as described in figures 38 to 41 where the background shown in white remains unpainted.

Figure 43 shows a picture according to the present invention where according to a painting technique to be followed, a light image area indicates the area within which two adjacent colours shown in figures 38 and 39 can be mixed together or can be coloured to blend together in order to soften a hard transition from one colour means to the next and where partly illuminated areas show where these colour means which are applied should not be mixed together. According to the present invention the indication above the palette indicates the two colour means concerned in this step and the indication can also show a possible mixing ratio.

Figure 44 shows a projection of a lightest area according to the present invention if a picture as shown in figure 43 had been divided into 12 areas based on the greyscale range.

Figure 45 shows a picture or photograph to be input into the system.

Figure 46 shows an implementation of the picture from figure 45 according to the invention with colour areas having been outlined as known in prior art with the enlargement of figure 38 shown again according to such known prior art and shows that any placement of indications such as colour numbers is limited to outlines within which a legible number can still be placed.

Figure 47 shows a full colour spectrum converted into greyscale values with the colour division into the CMYK colour system as common in printing technology being indicated for reference purposes and where white (W), cyan (C), magenta (M), yellow (Y) and black (B) each being within the colour spectrum of this figure 47.

Figure 48 shows the full colour spectrum from figure 47 divided into four greyscale value areas according to the system and method of the present invention. The lightest area comprises the colours white and yellow, the darkest area comprises the colours C and B.

Figure 49 shows the full colour spectrum from figure 47 divided into seven colour areas according to the system in the present invention.

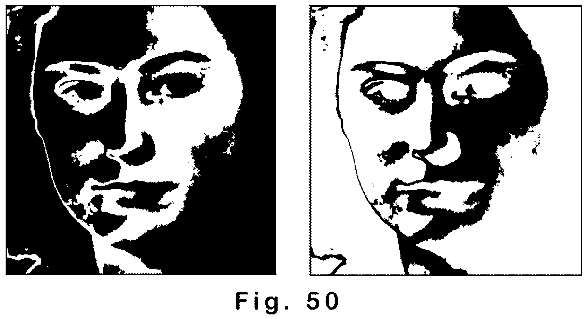

Figure 50 shows a projection step according to the invention with an area to be painted being highlighted in a first light intensity on the left and with this same area being identified on the right by highlighting precisely only the surrounding area of the area in this first light intensity and with the area to be painted which is to be followed comprising the substantially unilluminated parts of a second light intensity.

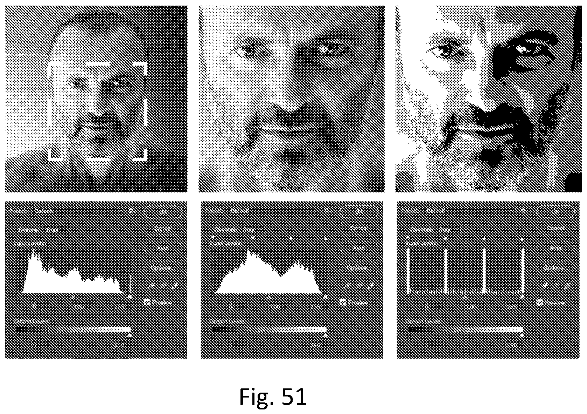

Figure 51 shows an input photograph on the left. A cut-out is indicated by dotted lines in the photograph. The system displays this photograph with a cut-out on an image display device, e.g. an Ipad or Iphone or computer screen. The user can then change the cut-out, e.g. shift, enlarge, change the aspect ratio, rotate, and/or adjust the corner points or the number of corner points. The greyscale histogram for the photograph as a whole has been drawn below the left-hand photograph. Once the final version of the cut-out has been saved or the cut-out has been approved by the user, the system will analyse the pixels in the cut-out. The middle photograph shows the cut-out. A greyscale histogram for the cut-out is provided under the central photograph. In embodiments the system can edit the greyscale values for the cut-out in order to improve the contrast. For example the greyscale values can be extended to the full range from 0 to 255. Next, all pixels with a greyscale value in the first quarter from 0 to 255, with 0 being black and 255 being the highest intensity, are assigned greyscale value 0 (black), those in the second quarter are assigned greyscale value 85, those in the third quarter greyscale value 170 and those in the lightest quarter greyscale value 255 (white at the highest light intensity). Next these pixels with these assigned greyscale values are shown to the user in a greyscale picture. That is the picture shown in the right-hand part of figure 51. This picture gives the user an idea of what the painting will look like when painted. In general the user is not shown the histograms. After this the user can give their approval. The right-hand photograph comprises four sub-areas, and that is a situation which is between figures 35 (three sub-areas) and 36 (five sub-areas). In embodiments the system shows the user several possible divisions, as for example shown schematically in figures 35, 36 and 37, with figure 35 illustrating a division into three, figure 36 a division into five, and figure 37 a division into seven. The system can also enable the user to make the picture to be painted darker or lighter. This enables the user to increase or decrease the sizes of the different sub-areas relative to each other. If the cut-out is made lighter more pixels will show in the lightest part. If the user is satisfied, they can give their approval. The system then establishes the sub-areas, and projects the first projection image with, for example, the lightest pixels from the right-hand picture in white light (light intensity 255) and the rest of the pixels with light intensity 0 on a painting canvas, for example. The user has chosen a colour or has been advised a colour by the system which has a greyscale value in the lightest segment and the user colours the parts indicated with white light with this colour. When the user has indicated that this has been finished, the system will project the second lightest pixels. This process repeats until all projection images have been finished. Depending on the dead colour used a situation can occur where the dead colour used is a paint which could be used for the darkest pixels, the projection image to be projected the last, and in that case, if the user is satisfied with this, it is not necessary to apply any extra paint for the darkest pixels.

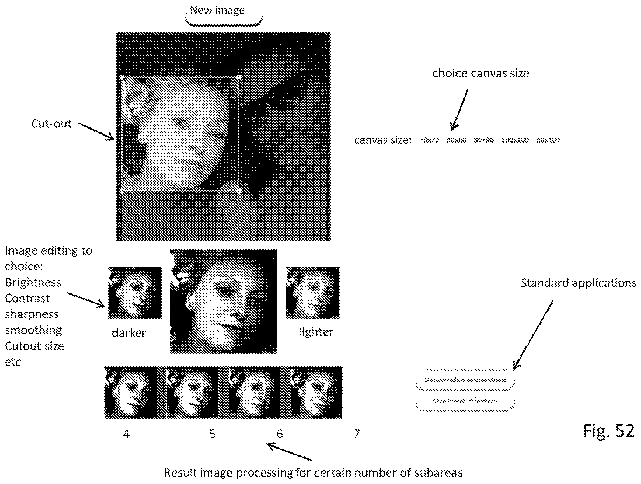

Figure 52 illustrates how a user can control the generation of the sub-areas and thus make their own creative choice in how the image is divided into projection images.

The user can input a picture in this preferred embodiment, this is represented schematically by the 'new picture' button. The user can then decide to make a cut-out from the picture. The size and shape of the cut-out can be set. The cut-out forms the part of the input picture which the user wants to paint or draw. The cut-out is shown under the picture in this embodiment. This figure shows the same cut-out but one shade darker or lighter on the left and the right of this cut-out. The user can select the relevant darker or lighter picture with the cursor in order to make the cut-out darker or lighter. The figure is an illustration of the image editing action of adjusting the brightness. Other forms of editing, such as changing contrast, picture sharpness, size and shape of the cut-out are possible in embodiments of the invention. It is also possible to photoshop or to add or leave out elements in certain embodiments. How the cut-out is divided into sub-areas is shown to the user under the cut-out. This enables the user to check that the division is not too coarse causing too many details to be lost and is not too fine which would make it difficult to paint. In embodiments where the user can input the means they want to use in order to apply the painting the system can give advice as to the number of sub-areas.

If a rather coarse painting means such as a palette knife is chosen the most suitable number of sub-areas will be smaller than if a fine brush were used. In embodiments the system comprises an input feature to enable the user to select painting styles and the system preferably comprises an output feature to show the image to the user after the image has been processed according to a selected painting style. In embodiments showing can take place by means of projection or by means of an image on, for example, a portable display device of the user. Examples of styles which can be chosen are impressionism, expressionism, cubism, painting in Picasso or Dali style, cartoon style with certain parts of the face, such as eyes, lips or ears being made larger, distorting mirror effects, converting a picture into a picture consisting of blocks or dots as shown in figures 14 to 22, etc.

In preferred embodiments the system has been configured to select one or more sets of paints for the sub-areas after the sub-areas have been established and to present one or more sets to the user.

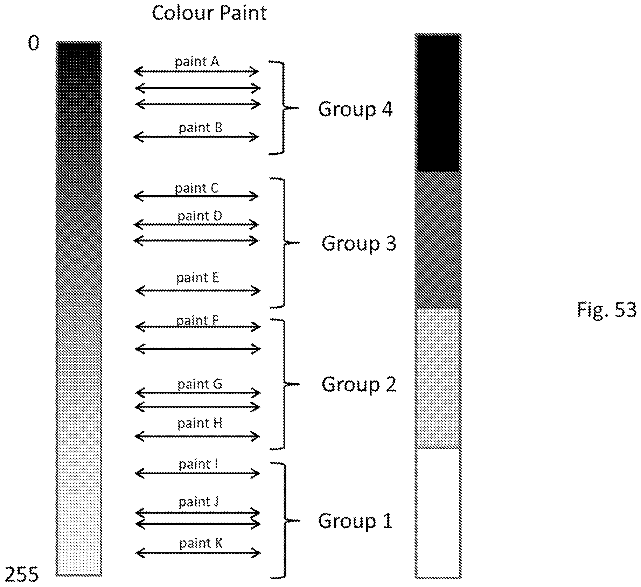

Figures 53 to 56 illustrate a possible method.

A greyscale value ranging from black, 0, to the highest intensity of white light, 255, is shown on the extreme left of figure 53.

A greyscale value can be assigned to each paint. This is no different from converting a colour into a greyscale value. The middle column gives the greyscale value for a number of paints, paints A to K. The greyscale value can be divided into four equal parts. The paints can then be divided into four groups. Figure 52 shows groups 1 to 4, with group 1 having the highest greyscale value, white or nearly white, and group 4 having the lowest, black or dark grey. Figure 53 shows the same thing, but then for a division into six groups.

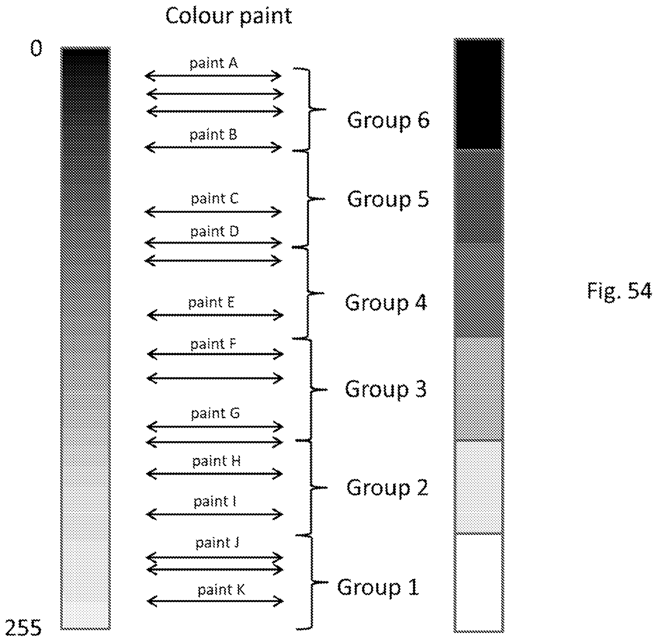

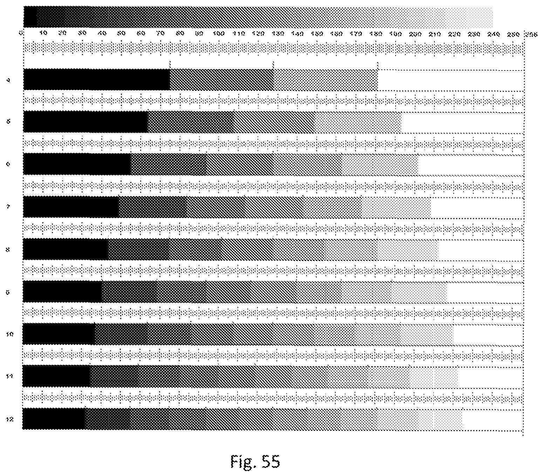

The greyscale has been divided into four or six equal parts in figures 53 and 54. This is not the only possible division. Figure 55 shows a division where the distribution near the centre of the greyscale is finer than at the edges. Every greyscale range [Translator's note: this section in the source text seems to have been included by mistake] Of course, another greyscale range division may change the distribution of paints among the groups.

In preferred embodiments of the invention the system has been configured to determine one or more suitable sets of colour means and present them to the user as a possible usable set. The following rules are preferably observed when determining a possibly useful set of colour means:
- A colour means with a greyscale value in the greyscale range for the sub-area in question is selected for each sub-area
- The difference between the greyscale values of two colour means chosen should be more than a base difference, with the base difference preferably being determined as follows: Base difference = (average width of the greyscale ranges for the colours chosen)/N with N being 4 as a maximum and preferably 3 and most preferably 2.

The choice of paints may depend on a user indicated preference for certain colours, such as red, green or blue.

The distance in greyscale values between two chosen colours is then more than one fourth of the width of the greyscale ranges and preferably more than one third or even more than half the width of the greyscale ranges. If the difference between the greyscale values of two paints chosen is smaller the optical effect will be less.

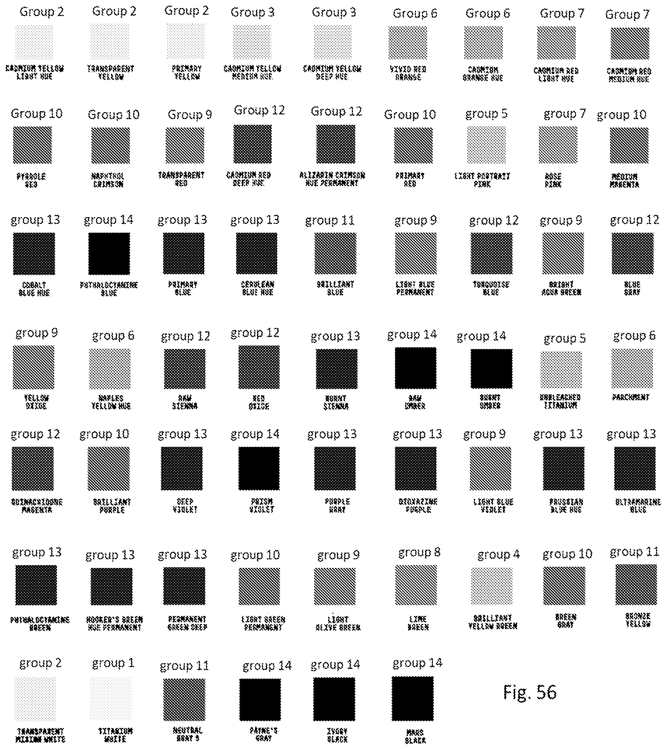

Figure 56 shows a scheme of 60 paints with each paint being displayed in grey. The paints are subdivided into 14 groups in figure 55. Group 1 is the lightest group and comprises titanium white, group 14 is the darkest group and comprises very dark colours.

It will be clear that the invention is not limited to the examples given.

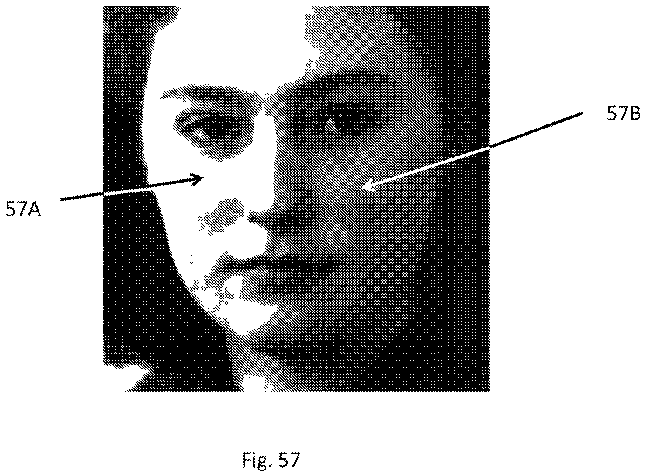

Figure 57 shows an embodiment in which a sub-area 57A is projected and also an attenuated version 57B, for example with a fourth or a third of the original intensity, of the part of the original image that does not belong to the projected sub-area 57A, the rest of the image. This allows the user to better estimate the position of the sub-area in the whole of the original image. The method may, in embodiments, give the user the choice of whether or not to display in attenuated version the remainder of the image adjacent to the sub-area, and/or adjust the intensity of the remainder of the image.

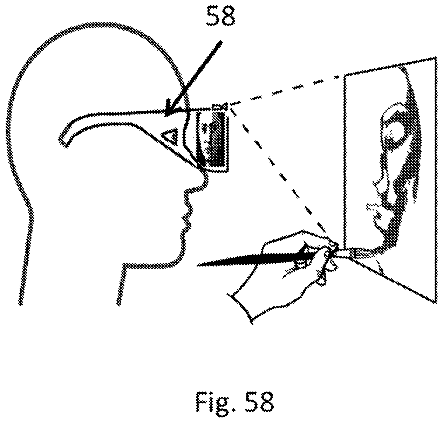

Figure 58 shows an embodiment in which the images are displayed to a user via virtual reality glasses 58. The sub-areas projected virtually on the canvas are visible to the user and he/she can draw the painting. The partial areas are not visible to bystanders, they only see a canvas to be painted.

This gives a mysterious aspect to the working method for the bystanders, in which the user conjures up a good-looking painting of a well-known image 'out of the sky'. Virtual reality glasses come in different versions with the aim of providing the user with image information which is either projected directly on the eye or on the inside of the glass. According to the invention, both types of projection can be used as a system for displaying light projection images. In the image that the wearer of the virtual reality glasses sees, the light projection images are visible as projected onto the object to be painted, and thus visually, for the wearer of the virtual reality glasses, projected onto the object to be painted.

In brief, the invention can be summarised as follows:
A digital picture is divided into N groups of pixels based on a pixel property. A set of N projection images is generated on the basis of this division. Each projection image shows one of the groups of pixels in substantially white light in a light intensity and the other pixels in a differing light intensity. Preferably the pixel property which is the basis for the division is the greyscale value and preferably the remaining pixels are also projected in substantially white light.

## Claims

1. System for displaying light projection images, comprising a means (41) to input a picture and a
means (41) to provide image information to a light projection set-up (42,51) for displaying a light image (46) on an object (43) for applying a picture to be painted or drawn on the object using different colour means, wherein the system comprises a means to divide the input picture or a cut-out thereof or an edited version of the input picture or a cut-out thereof into three or more sub-areas based on pixel properties with a specific pixel property range for each sub-area, **characterised in that** the image information comprising information for displaying a set of 3 or more projection images and with each projection image of the set displaying one of the three or more separate sub-areas with substantially uncoloured light of a first light intensity and displaying the rest of the picture, or the rest of the cut-out of the picture, with light of a second light intensity, different from the first light intensity, with the sub-areas jointly at least substantially covering the picture or the cut-out of the picture.

2. System as claimed in claim 1, with the pixel property groups being divided on the basis of pixel greyscale values.

3. System as claimed in the above claims, with the quotient of the first light intensity and the second light intensity being at least more than 2 or at least less than 0.5.

4. System as claimed in one of the above claims with the set of projection images comprising 4, 5, 6 or 7 projection images.

5. System as claimed in one of the above claims, with the system being configured for successively displaying the 3 or more projection images of the set of projection images in the order of ascending or descending grey scale values.

6. System as claimed in one of the above claims, **characterised in that** the system comprises a means to enable users to make the cut-out from an input picture.

7. System as claimed in one of the above claims, **characterised in that** the means comprises an output feature for displaying, along with the projection image, characteristics of one or more colour means to be used for instruction purposes when applying the sub-area belonging to the projection image by means of light projected onto or next to the object.

8. System as claimed in one of the above claims, with the means also comprising an input feature for inputting sets of 3 or more projection images from an existing database portfolio.

9. System as claimed in one of the above claims, with the means comprising a supply feature to supply a picture in colour values to a converter to convert the colour picture into a greyscale picture.

10. System as claimed in one of the above claims with the system comprising an input feature to enable a user to input a set of 3 or more projection images..

11. System as claimed in claims 8, 9 or 10, with the system comprising an analyser to analyse the input colour picture or cut-out and/or the greyscale picture or cut-out and a comparator for comparing the results of the analysis to a database which comprises data of colour means and for preparing and showing the user one or more sample sets of the colour means matching the analysis.

12. System as claimed in claim 2, with the projection images comprising sub-areas with a greyscale value between a lower and upper greyscale value specific for the projection image.

13. System as claimed in one of the above claims, with the system comprising a projector or digital light screen for displaying the set of 3 or more projection images.

14. System as claimed in one of the above claims with the means comprising an internet site or app enabling the use of a digital service to provide sets of projection images for an input picture.

15. System as claimed in one of the above claims, with the means comprising an internet site or app and the internet site or app comprising an input option enabling the user to input a picture or cut-out for producing a set of projection images to be displayed for the input picture or cut-out and the means comprising an output feature to show the user the projection images produced for use in a light projection set-up.

16. System as claimed in one of the above claims with the system comprising an input feature to enable the user to change one or more of the following properties of the input picture:
- brightness
- contrast
- cut-out size
- cut-out shape
- cut-out focus
- cut-out detail level

17. System as claimed in one of the above claims, with the means comprising an input feature to enable the user to specify a desired technique or style and the means comprising an output feature to give instructions or suggestions, depending on the desired technique specified, in order to include the desired technique in the production of the work.

18. System as claimed in one of the above claims with the system comprising a measurement set-up to measure colour properties of an applied paint with the measurement set-up comprising a camera to observe the colour properties.

19. Method for producing a painting using a system as claimed in one of the claims 1 to 18 with the object being a painting canvas and the painting canvas having been provided with a background texture and/or colour prior to displaying the projection images and with the painting canvas being left unpainted for the lightest or darkest projection image and the background texture and/or colour remaining visible as part of the picture to be applied with a background of a picture to be painted not having been included as a surface to be painted and has thus being left open and keeping the colour of the background to be painted and where the projection images only show the subject to be displayed from the picture or the cut-out of the image.

20. Method for processing a digital picture where the digital picture is converted into a digital greyscale picture, the digital greyscale picture is divided into three or more sub-areas based on pixel greyscale values with a specific greyscale range for each sub-area and a set of 3 or more digital images is generated from the digital greyscale picture with each digital image of the set comprising one of the 3 or more sub-areas with the pixels of the sub-area in question being assigned pixel values which correspond with a display with substantially uncoloured light of a first light intensity and the rest of the digital picture is assigned pixel values which correspond with light of a second light intensity which differs from the first light intensity and with the joint sub-areas at least substantially covering the digital picture.

## Patentansprüche

1. System zur Anzeige von Lichtprojektionsbildern, mit einem Mittel (41) zur Eingabe eines Bildes und einem Mittel (41) zur Bereitstellung von Bildinformationen für eine Lichtprojektionseinrichtung (42, 51) zur Anzeige eines Lichtbildes (46) auf einem Objekt zur Aufbringung eines zu malenden oder zu zeichnenden Bildes auf dem Objekt unter Verwendung verschiedener Farbmittel, wobei das System ein Mittel zur Unterteilung des eingegebenen Bildes oder eines Ausschnitts davon oder einer bearbeiteten Version des eingegebenen Bildes oder eines Ausschnitts davon in drei oder mehr Unterbereiche auf der Grundlage von Pixeleigenschaften mit einem spezifischen Pixeleigenschaftsbereich für jeden Unterbereich umfasst, der sich **dadurch kennzeichnet, dass** die Bildinformationen Informationen zur Anzeige eines Satzes von drei oder mehr Projektionsbildern umfassen, wobei jedes Projektionsbild des Satzes einen der drei oder mehr getrennten Unterbereiche mit im Prinzip ungefärbtem Licht einer ersten Lichtintensität anzeigt und den Rest des Bildes oder den Rest des Bildausschnitts mit Licht einer zweiten Lichtintensität anzeigt, die sich von der ersten Lichtintensität unterscheidet, wobei die Unterbereiche gemeinsam zumindest im Prinzip das Bild oder den Bildausschnitt abdecken.

2. System gemäß Patentanspruch 1, wobei die Pixel-Eigenschaftsgruppen auf der Grundlage von Pixel-Graustufenwerten unterteilt werden.

3. System gemäß einem der obigen Patentansprüche, wobei der Quotient aus der ersten Lichtintensität und der zweiten Lichtintensität mindestens größer als 2 oder mindestens kleiner als 0,5 ist.

4. System gemäß einem der obigen Patentansprüche, wobei der Satz von Projektionsbildern aus 4, 5, 6 oder 7 Projektionsbildern besteht.

5. System gemäß einem der obigen Patentansprüche, wobei das System so konfiguriert ist, dass es nacheinander die drei oder mehr Projektionsbilder des Satzes von Projektionsbildern in der Reihenfolge auf- oder absteigender Graustufenwerte anzeigt.

6. System gemäß einem der obigen Patentansprüche, das sich **dadurch kennzeichnet, dass** das System ein Mittel umfasst, die es Benutzern ermöglicht, den Ausschnitt aus einem eingegebenen Bild zu erstellen.

7. System gemäß einem der obigen Patentansprüche, das sich **dadurch kennzeichnet, dass** die Mittel eine Ausgabefunktion umfassen, um zusammen mit dem Projektionsbild die Merkmale eines oder mehrerer Farbmittel anzuzeigen, die für Anweisungszwecke zu verwenden sind, wenn der zum Projektionsbild gehörende Teilbereich mithilfe von auf oder neben das Objekt projiziertem Licht aufgetragen wird.

8. System gemäß einem der obigen Patentansprüche, wobei die Mittel ebenfalls eine Eingabefunktion zur Eingabe von Sätzen von drei oder mehr Projektionsbildern aus einem bestehenden Datenbankportfolio umfassen.

9. System gemäß einem der obigen Patentansprüche, wobei die Mittel eine Zufuhrfunktion umfassen, um ein Bild in Farbwerten an einen Konverter zu leiten, der das Farbbild in ein Graustufenbild umwandelt.

10. System gemäß einem der obigen Patentansprüche, wobei das System eine Eingabefunktion umfasst, die es einem Benutzer ermöglicht, einen Satz von drei oder mehr Projektionsbildern einzugeben.

11. System gemäß Patentanspruch 8, 9 oder 10, wobei das System einen Analysator zur Analyse des eingegebenen Farbbildes oder -ausschnitts und/oder des Graustufenbilds oder -ausschnitts sowie einen Komparator zum Vergleich der Analyseergebnisse mit einer Datenbank umfasst, die Daten von Farbmitteln enthält, und zur Vorbereitung und Anzeige eines oder mehrerer Mustersätze der Farbmittel, die mit der Analyse übereinstimmen, an den Benutzer dient.

12. System gemäß Patentanspruch 2, wobei die Projektionsbilder Teilbereiche mit einem Graustufenwert zwischen einem unteren und einem oberen für das Projektionsbild spezifischen Graustufenwert umfassen.

13. System gemäß einem der obigen Patentansprüche, wobei das System einen Projektor oder einen digitalen Lichtbildschirm umfasst, der es einem Benutzer ermöglicht, einen Satz von drei oder mehr Projektionsbildern anzuzeigen.

14. System gemäß einem der obigen Patentansprüche, wobei die Mittel eine Internetseite oder eine App umfassen, die die Nutzung eines digitalen Diensts ermöglicht, um Sätze von Projektionsbildern für ein Eingangsbild bereitzustellen.

15. System gemäß einem der obigen Patentansprüche, wobei die Mittel eine Internetseite oder eine App umfassen, und die Internetseite oder die App eine Eingabemöglichkeit umfasst, die es dem Benutzer ermöglicht, ein Bild oder einen Ausschnitt einzugeben, um einen Satz von Projektionsbildern zu erzeugen, die für das eingegebene Bild oder den eingegebenen Ausschnitt angezeigt werden sollen, und die Mittel eine Ausgabefunktion umfassen, um dem Benutzer die erzeugten Projektionsbilder zur Verwendung in einer Lichtprojektionsanordnung zu zeigen.

16. System gemäß einem der obigen Patentansprüche, wobei das System eine Eingabefunktion umfasst, die es dem Benutzer ermöglicht, eine oder mehrere der nachstehenden Eigenschaften des Eingabebilds zu ändern:
- Helligkeit
- Kontrast
- Ausschnittgröße
- Ausschnittform
- Ausschnittfokus
- Ausschnitt-Detailstufe

17. System gemäß einem der obigen Patentansprüche, wobei das Mittel eine Eingabefunktion umfasst, die es dem Benutzer ermöglicht, eine gewünschte Technik oder einen gewünschten Stil freizugeben, und das Mittel eine Ausgabefunktion umfasst, die in Abhängigkeit von der angegebenen gewünschten Technik Anweisungen oder Vorschläge gibt, um die gewünschte Technik in die Herstellung des Werks einzubeziehen.

18. System gemäß einem der obigen Patentansprüche, wobei das System eine Messanordnung zur Messung von Farbeigenschaften einer aufgetragenen Farbe umfasst, wobei die Messanordnung eine Kamera zur Beobachtung der Farbeigenschaften umfasst.

19. Verfahren zur Herstellung eines Gemäldes unter Verwendung eines Systems gemäß einem der Patentansprüche 1 bis 18, wobei das Objekt eine Malerleinwand ist und die Malerleinwand vor der Darstellung der Projektionsbilder mit einer Hintergrundtextur und/oder -farbe versehen worden ist und wobei die Malerleinwand für das hellste oder dunkelste Projektionsbild unbemalt gelassen wird und die Hintergrundtextur und/oder -farbe als Teil des aufzutragenden Bildes sichtbar bleibt, wobei ein Hintergrund eines zu bemalenden Bildes nicht als zu bemalende Fläche einbezogen wurde und somit offen gelassen wird und die Farbe des zu bemalenden Hintergrundes beibehält und wobei die Projektionsbilder nur das darzustellende Motiv aus dem Bild oder den Bildausschnitt zeigen.

20. Verfahren zur Verarbeitung eines digitalen Bildes, wobei das digitale Bild in ein digitales Graustufenbild umgewandelt wird, das digitale Graustufenbild in drei oder mehr Teilbereiche auf der Basis von Pixel-Graustufenwerten mit einem bestimmten Graustufenbereich für jeden Teilbereich unterteilt wird und aus dem digitalen Graustufenbild ein Satz von drei oder mehr digitalen Bildern erzeugt wird, wobei jedes digitale Bild des Satzes einen der drei oder mehr Teilbereiche umfasst, wobei den Pixeln des betreffenden Teilbereichs Pixelwerte zugeordnet werden, die einer Darstellung mit im Wesentlichen ungefärbtem Licht einer ersten Lichtintensität entsprechen, und der Rest des digitalen Bildes Pixelwerte zugewiesen werden, die die einem Licht einer zweiten Lichtintensität entsprechen, die sich von der ersten Lichtintensität unterscheidet, und wobei die gemeinsamen Teilbereiche das digitale Bild zumindest im Wesentlichen abdecken.

## Revendications

1. Système d'affichage d'images par projection lumineuse, comprenant un moyen (41) pour entrer une image et un moyen (41) pour fournir des informations sur l'image à un dispositif de projection lumineuse (42, 51) pour afficher une image lumineuse (46) sur un objet pour appliquer une image à peindre ou à dessiner sur l'objet avec différents moyens de coloration, dans lequel le système comprend un moyen pour diviser l'image d'entrée ou une découpe de celle-ci ou une version éditée de l'image d'entrée ou une découpe de celle-ci en trois sous-zones ou plus, sur la base de propriétés de pixel, une plage de propriétés de pixel étant spécifique à chaque sous-zone, **caractérisé en ce que** les informations d'image comprennent des informations pour afficher un ensemble de 3 images de projection ou plus et chaque image de projection de l'ensemble affichant l'une des trois sous-zones distinctes ou plus avec une lumière essentiellement incolore d'une première intensité lumineuse et affichant le reste de l'image, ou le reste de la découpe de l'image, avec une lumière d'une seconde intensité lumineuse, différente de la première intensité lumineuse, les sous-zones recouvrant conjointement au moins essentiellement l'image ou la découpe de l'image.

2. Système selon la revendication 1, les groupes de propriétés de pixels étant répartis sur la base des valeurs de la gamme de gris de pixels.

3. Système selon les revendications précédentes, le quotient de la première intensité lumineuse et de la seconde intensité lumineuse étant au moins supérieur à 2 ou au moins inférieur à 0,5.

4. Système selon l'une des revendications précédentes, l'ensemble d'images de projection comprenant 4, 5, 6 ou 7 images de projection.

5. Système selon l'une des revendications précédentes, le système étant configuré pour afficher successivement les 3 images de projection ou plus de l'ensemble d'images de projection dans l'ordre ascendant ou descendant des valeurs de gamme de gris.

6. Système selon l'une des revendications précédentes, **caractérisé en ce que** le système comprend un moyen de permettre aux utilisateurs de réaliser la découpe à partir d'une image d'entrée.

7. Système selon l'une des revendications précédentes, **caractérisé en ce que** le moyen comprend une fonction de sortie pour afficher, avec l'image de projection, les caractéristiques d'un ou plusieurs moyens de coloration à utiliser à des fins d'instruction lors de l'application de la sous-zone appartenant à l'image de projection au moyen de la lumière projetée sur ou à côté de l'objet.

8. Système selon l'une des revendications précédentes, dont les moyens comprennent également une fonction d'entrée permettant d'introduire des ensembles de 3 images de projection ou plus à partir d'un portefeuille existant de bases de données.

9. Système selon l'une des revendications précédentes, dont les moyens comprennent une fonction d'alimentation pour fournir une image en valeurs de couleur à un convertisseur, pour convertir l'image en couleurs en une image dans une gamme de niveaux de gris.

10. Système selon l'une des revendications précédentes, le système comprenant une fonction d'entrée pour permettre à un utilisateur d'introduire un ensemble de 3 images de projection ou plus.

11. Système selon les revendications 8, 9 ou 10, le système comprenant un analyseur pour analyser l'image ou la découpe d'entrée en couleur et/ou l'image ou la découpe d'entrée en niveaux de gris et un comparateur pour comparer les résultats de l'analyse à une base de données qui comprend des données de moyens de coloration et pour préparer et montrer à l'utilisateur un ou plusieurs ensembles d'échantillons des moyens de coloration correspondant à l'analyse.

12. Système selon la revendication 2, les images de projection comprenant des sous-zones avec une valeur de gamme de gris entre une valeur de gamme de gris inférieure et supérieure, spécifique à l'image de projection.

13. Système selon l'une des revendications précédentes, le système comprenant un projecteur ou un écran lumineux numérique pour afficher l'ensemble de 3 images de projection ou plus.

14. Système selon l'une des revendications précédentes, dont les moyens comprennent un site Internet ou une application permettant l'utilisation d'un service numérique pour fournir des ensembles d'images de projection pour une image d'entrée.

15. Système selon l'une des revendications précédentes, dont les moyens comprennent un site ou une application Internet et le site ou l'application Internet comprend une option d'entrée permettant à l'utilisateur d'introduire une image ou une découpe pour produire un ensemble d'images de projection à afficher pour l'image ou la découpe d'entrée, et dont les moyens comprennent une fonction de sortie pour montrer à l'utilisateur les images de projection produites pour utilisation dans une installation de projection lumineuse.

16. Système selon l'une des revendications précédentes, le système comprenant une fonction d'entrée pour permettre à l'utilisateur de modifier une ou plusieurs des propriétés suivantes de l'image d'entrée :
- luminosité
- contraste
- taille de découpe
- forme de découpe
- focalisation de la découpe
- niveau de détail de la découpe

17. Système selon l'une des revendications précédentes, dont les moyens comprennent une fonction d'entrée pour permettre à l'utilisateur de spécifier une technique ou un style souhaité et les moyens comprenant une fonction de sortie pour donner des instructions ou des suggestions, en fonction de la technique souhaitée spécifiée, afin d'inclure la technique souhaitée dans la production du travail.

18. Système selon l'une des revendications précédentes, le système comprenant un dispositif de mesure pour mesurer les propriétés de couleur d'une peinture appliquée, le dispositif de mesure comprenant une caméra pour observer les propriétés de couleur.

19. Procédé de production d'une peinture à l'aide d'un système selon l'une des revendications 1 à 18, l'objet étant une toile à peindre et la toile à peindre ayant été pourvue d'une texture de fond et/ou d'une couleur de fond avant l'affichage des images de projection et la toile de peinture étant laissée non peinte pour l'image de projection la plus claire ou la plus sombre et la texture et/ou la couleur de fond restant visible en tant que partie de l'image à appliquer, le fond d'une image à peindre n'ayant pas été inclus en tant que surface à peindre et étant ainsi laissé vide et gardant la couleur du fond à peindre et où les images de projection montrent uniquement le sujet à afficher à partir de l'image ou de la découpe de l'image.

20. Procédé de traitement d'une image numérique dans lequel l'image numérique est convertie en une image numérique en niveaux de gris, l'image numérique en niveaux de gris est divisée en trois sous-zones ou plus sur la base de valeurs de niveaux de gris de pixels avec une gamme de niveaux de gris spécifique pour chaque sous-zone et un ensemble de 3 images numériques ou plus est généré à partir de l'image numérique en niveaux de gris, chaque image numérique de l'ensemble comprenant l'une des 3 sous-zones ou plus, les pixels de la sous-zone en question se voyant attribuer des valeurs de pixels qui correspondent à un affichage avec une lumière sensiblement incolore d'une première intensité lumineuse et le reste de l'image numérique se voit attribuer des valeurs de pixels qui correspondent à une lumière d'une seconde intensité lumineuse qui diffère de la première intensité lumineuse, les sous-zones conjointes couvrant au moins essentiellement l'image numérique.
